(19) Europäisches Patentamt
European Patent Office
Office européen des brevets

(11) **EP 4 667 960 A1**

(12) **EUROPEAN PATENT APPLICATION**

(43) Date of publication:
**24.12.2025 Bulletin 2025/52**

(21) Application number: **24183137.9**

(22) Date of filing: **19.06.2024**

(51) International Patent Classification (IPC):
**G01S 1/02** *(2010.01)*       **G01S 5/02** *(2010.01)*
**G01S 5/04** *(2006.01)*       **G01S 5/06** *(2006.01)*
**G01S 5/12** *(2006.01)*       **G01S 5/16** *(2006.01)*

(52) Cooperative Patent Classification (CPC):
**G01S 1/026; G01S 5/021; G01S 5/0244;**
G01S 5/02; G01S 5/04; G01S 5/06; G01S 5/12;
G01S 5/16

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **u-blox AG**
**8800 Thalwil (CH)**

(72) Inventors:
• Papaharalabos, Stelios
  **15125 Maroussi (GR)**
• Kappi, Jani
  **33720 Tampere (FI)**

(74) Representative: **Epping - Hermann - Fischer
Patentanwaltsgesellschaft mbH
Schloßschmidstraße 5
80639 München (DE)**

(54) **METHOD FOR DETERMINING A POSITION OF A MOBILE DEVICE, APPARATUS, SYSTEM, COMPUTER PROGRAM PRODUCT AND COMPUTER-READABLE STORAGE MEDIUM**

(57)    The present invention relates to a method for determining a position of a mobile device (5), the method comprising the steps:
- obtaining (201) estimated positioning information of at least one node (1, 2, 3, 7);
- determining (202) at least one positioning information correction factor for each of the at least one node (1, 2, 3, 7) based on a comparison of the estimated positioning information of the at least one node (1, 2, 3, 7) with respective predetermined positioning information of the at least one node (1, 2, 3, 7);
- obtaining (203) estimated positioning information of a mobile device (5);
- determining (204) adjusted positioning information of the mobile device (5) by applying at least one of the at least one positioning information correction factor to the estimated positioning information of the mobile device (5) based on a distance between the mobile device (5) and the at least one node (1, 2, 3, 7). The invention further relates to an apparatus (9), system (6), computer program product and computer-readable storage medium.

Fig. 11

EP 4 667 960 A1

**Description**

TECHNICAL FIELD

This disclosure relates to a method for determining a position of a mobile device. This disclosure further relates to an apparatus for determining a position of a mobile device, a corresponding system, a corresponding computer program product, and a corresponding computer-readable storage medium.

BACKGROUND ART

Positioning methods and devices for determining a position of a device, e.g. a mobile device, have become a very important and widely implemented tool in nearly all fields of industries and private life. Due to varying environments and different kinds of obstacles, an accuracy of such determined positions often may be unreliable, which in today's use of such positioning methods and devices may be a rather unsatisfying or even dangerous issue.

Therefore, it is an object of the present disclosure to improve accuracy of known positioning methods and positioning devices.

SUMMARY OF THE INVENTION

The above-mentioned object is solved by the subject-matter of the attached independent claims. Further embodiments are disclosed in the attached dependent claims.

A method for determining a position of a mobile device comprises the following steps:

- obtaining estimated positioning information of at least one node;
- determining at least one positioning information correction factor for each of the at least one node based on a comparison of the estimated positioning information of the at least one node with respective predetermined positioning information of the at least one node;
- obtaining estimated positioning information of a mobile device;
- determining adjusted positioning information of the mobile device by applying at least one of the at least one positioning information correction factor to the estimated positioning information of the mobile device based on a distance between the mobile device and the at least one node.

An advantage of the above method is that an accuracy of positioning information of a mobile device is improved. The estimated positioning information of the mobile device may be inaccurate due to affect cause, for example, by an environment. By determining the at least one positioning information correction factor using estimated positioning information and a known positioning information of the at least one node, such inaccuracy may be observed and the positioning information correction factor, which accounts for this inaccuracy, is applied to the estimated positioning information of the mobile device, thereby improving accuracy of the estimated positioning information of the mobile device.

By considering the distance between the mobile device and the at least one node when applying the at least one of the at least one positioning information correction factor to the estimated positioning information of the mobile device, adequate positioning information correction may be achieved, which further improves the accuracy of the determined adjusted positioning information of the mobile device. For example, one or more positioning information correction factors of one or more nodes that are close (i.e., closer than other nodes) or closest to the mobile device may be chosen as correction factors that are applied to the estimated positioning information of the mobile device, and/or positioning information correction factors of one or more nodes may be applied to the estimated positioning information of the mobile device based on a weighting of the one or more correction factors, wherein a weight of a positioning information correction factor of a node that is closer to the mobile device may have a higher value than a positioning information correction factor of a node that is further away from the mobile device.

The positioning information in the context of this application may comprise any information, from which a position of the at least one node or the mobile device may be derived. For example, the positioning information in the context of this application comprises directly a position, e.g. coordinates in a given space, of the respective devices, or comprises angles and/or distances, from which such position may be determined.

For example, in case the positioning information is determined in an indoor positioning system, signals, based on which a position of a mobile device may be determined, can be significantly affected by a signal propagation environment. For example, the signals may be affected by multipath propagation and walls or floors biasing measurements. Those effects directly affect the estimated position of the mobile device. By applying the corresponding positioning information correction factor, a resulting inaccuracy may be removed or at least reduced.

For example, the method steps of the method described above may be carried out by one or more than one of the nodes mentioned above. Alternatively, the method steps may at least partly be carried out by a separate positioning engine, which may obtain the estimated positioning information of the at least one node and the mobile device from the at least one node. Alternatively, the method steps may be carried out by a distributed system, in which multiple parts of such positioning engine may be implemented in multiple devices, e.g. in two or more of the above-mentioned nodes.

The estimated positioning information in the context of this application refers to positioning information of the respective entities, which is based on measurements. The predetermined positioning information in the context of this application refers to positioning information that is known to the system, also referred to as the "ground truth" of a device.

The estimated positioning information may be any positioning information that is determined based on a signal transmitted between nodes (for the estimated positioning information of the at least one node) or based on a signal transmitted between the mobile device and at least one node (for the estimated positioning information of the mobile device). The positioning information may include any information, based on which a position of the mobile device may be determined. In particular, the positioning information may be information from which a distance between the nodes or the nodes and the mobile device may be determined, and/or from which a distance and direction between the nodes or the nodes and the mobile device may be determined. Therewith, 2-dimensional and/or 3-dimensional positioning may be performed. The positioning information for both 2D and 3D positioning may be angles, distances, or a combination of both derived from the transmitted signal. Further explanation and examples thereof are provided in the following.

The signals in the context of this application may be, for example, any short-range signals. For example, the short-range signals may be a Bluetooth Low Energy, BLE, signal, an Ultra-wideband, UWB, signal, or a Wi-Fi signal. Furthermore, positioning signals of cellular technologies like 5G or 6G variants, for example DECT2020 NR, may be used. Moreover, positioning signals of more generic mmWave RF solutions for radar usage or light (visible or invisible) based solution, such as for example infrared, may be used for location determination in the context of this application. The content of this application is independent of specific standards of the aforementioned signal types and is applicable to any existing or future standards of the mentioned short-range signals.

According to at least one embodiment, the step of obtaining estimated positioning information of at least one node comprises:

- obtaining an angle of arrival and/or an angle of departure of at least one signal transmitted between the at least one node and at least one further node, and
- determining the estimated positioning information of the at least one node based on the obtained angle of arrival and/or angle of departure of the at least one signal; and/or
- obtaining a distance between the at least one node and at least one further node based on at least one signal transmitted between the at least one node and the at least one further node, and
- determining the estimated positioning information of the at least one node based on the obtained distance between the at least one node and at least one further node.

An advantage thereof is that a reliable and efficient way of determining the estimated positioning information of the at least one node is provided. Moreover, it is advantageous that the estimated positioning information of the at least one node determined this way may be affected by environmental effects very similar to the estimated position of the mobile device, such that a positioning information correction factor determined using said estimated positioning information of the node may be particularly relevant for adjusting the estimated positioning information of the mobile device, thereby further improving accuracy.

The at least one node and the at least one further node may all be nodes of a same set of nodes. For example, in case estimated positioning information of four nodes in total shall be determined, the respective positioning information of each of those four nodes may be estimated based on signals transmitted between always one of those four nodes and the respective other three nodes, each. The nodes that are used for determining the estimated positioning information of a node may also be a subset of all available nodes, for which estimated positioning information is to be determined. Using the aforementioned example of four nodes, each node may use, for example, two of the other three nodes to determine its estimated positioning information. Those examples, of course, are merely intended for a better understanding. Of course, many more nodes may be present in a system and/or may be used to determine respective estimated positioning information.

According to at least one embodiment:

- the estimated positioning information of the at least one node and the predetermined positioning information of the at least one node each comprise a position of the at least one node; and
- the estimated positioning information of the mobile device comprises a position of the mobile device.

An advantage thereof is that a very efficient and reliable method for improving accuracy of a determined position of a mobile device is provided. A position in this context refers to a position that is determined, for example, using coordinates in a given space, such as [x,y,z] values. The position comprised in the estimated positioning information, hence, is an estimated position of the at least one node. The position comprised in the predetermined positioning information, hence, is a predetermined position of the at least one node.

According to at least one embodiment:

- the at least one positioning information correction factor for each of the at least one node comprises a value of a difference between the estimated position and the predetermined position of the respective node.

The positioning information correction factor in this embodiment comprises a distance by how far the estimated position of a node is offset with regard to its predetermined position. For example, in case the estimated and predetermined positions of a node comprise [x,y,z] values, the positioning information correction factor also comprises corresponding [x,y,z] values.

According to at least one embodiment:

- the estimated positioning information of the at least one node and the predetermined positioning information of the at least one node each comprise an angle of arrival and/or an angle of departure and/or a distance between the at least one node and at least one further node; and
- the estimated positioning information of the mobile device comprises an angle of arrival and/or an angle of departure and/or a distance between the at least one node and the mobile device.

An advantage thereof is that a particularly high level of accuracy improvement may be achieved by this embodiment. The angle of arrival and/or the angle of departure and/or the distance comprised in the estimated positioning information may be an estimated angle of arrival, an estimated angle of departure, and/or an estimated distance that is obtained from a signal transmitted between the at least one node and the at least one further node or between the at least one node and the mobile device, i.e., obtained from a measurement of such transmitted signal. The angle of arrival and/or the angle of departure and/or the distance comprised in the predetermined positioning information may be obtained, i.e., calculated, from known positions of the at least one node and the at least one further node.

According to at least one embodiment:

- the at least one positioning information correction factor for each of the at least one node comprises a value of a difference between the estimated and the predetermined angle of arrival and/or angle of departure and/or distance between the at least one node and the at least one further node.

In the context of this application, the predetermined angle of arrival and/or angle of departure and/or distance may be determined based on pre-calculated node locations, which are known from the configuration of the system and the nodes therein. This determination of angles and distances may be done according to known position calculation methods.

The positioning information correction factor in this embodiment comprises a value by how far the estimated angles or distance between two nodes is offset with regard to corresponding angles or distance of their predetermined position. For example, in case the estimated and predetermined positioning information each comprises an angle of arrival, the positioning information correction factor comprises a correction value for the angle of arrival. For example, in case the estimated and predetermined positioning information each comprises an angle of departure, the positioning information correction factor comprises a correction value for the angle of departure. For example, in case the estimated and predetermined positioning information each comprises a distance, the positioning information correction factor comprises a correction value for the distance.

According to at least one embodiment, the step of determining the adjusted positioning information of the mobile device by applying at least one of the at least one positioning information correction factor to the estimated positioning information of the mobile device based on the distance between the mobile device and the at least one node comprises:

- determining a node that is closest to the mobile device; and
- applying the at least one positioning information correction factor of the closest node to the estimated positioning information of the mobile device.

An advantage thereof is that an easy to calculate and therefore efficient improvement of accuracy for determining a position of a mobile device is provided. According to this embodiment, it is assumed that the determination of a position of a mobile device underlies the same or rather similar environmental influences like a node, in which environment the mobile device is located, i.e., to which node the mobile device is closest to. Therefore, the correction factor which is determined based on the measurement and the known positioning information of the closest node is applied to the measurement of the positioning information of the mobile device.

According to at least one embodiment, the step of determining the adjusted positioning information of the mobile device by applying at least one of the at least one positioning information correction factor to the estimated positioning information of the mobile device based on the distance between the mobile device and the at least one node comprises:

- determining at least two nodes that are closest to the mobile device;
- determining at least one weighted positioning information correction factor based on the at least one positioning information correction factor of each of the at least two closest nodes, wherein a weight of the at least one positioning information correction factor of each of the at least two closest nodes is determined based on a respective distance to the mobile device; and
- applying the at least one weighted positioning information correction factor of the at least two closest nodes to the estimated positioning information of the mobile device.

An advantage herein is that an even higher accuracy improvement may be achieved. The positioning information correction factor applied to the estimated position of the mobile device, in this case, is based on the correction factors of two or more nodes. In particular in case a mobile device is located in an environment that is close to two or more nodes, the environmental influences in this area may be even better evaluated and considered for the estimated position of the mobile device in case such weighted correction factor is determined. For example, the correction factor of a node that is closer to the mobile device may have a higher weight than a correction factor of a node that is further away from the mobile device.

According to at least one embodiment, the step of obtaining estimated positioning information of a mobile device comprises:

- obtaining at least one angle of arrival and/or at least one angle of departure and/or at least one distance between the mobile device and the at least one node based on at least one signal received by the at least one node from the mobile device; and
- determining the estimated positioning information of the mobile device based on the at least one angle of arrival and/or at least one angle of departure and/or at least one distance between the mobile device and the at least one node.

In this embodiment, the estimated positioning information of the mobile device may either comprise the angle of arrival and/or angle of departure and/or distance directly, onto which the respective positioning information correction factor(s) are applied. In this case, the respective positioning information correction factor(s) also comprise the correction value for an angle of arrival/angle of departure and/or distance. Alternatively, determining the estimated positioning information of the mobile device based on the at least one angle of arrival and/or at least one angle of departure and/or at least one distance may comprise determining an estimated position of the mobile device based on those values. In this case, the respective positioning information correction factor(s) comprise the correction value for the position, e.g. based on the determined offset between the estimated and known positions of the respective node(s).

An advantage thereof is that the same or similar technology as for determining the positioning information correction factor(s) is used. This allows obtaining estimated positioning information that is very similarly affected by environmental influences, therefore providing a correction factor that is very significant for an inaccuracy of the estimated positioning information of the mobile device and, therefore, even better improvement of accuracy is achieved.

An apparatus for determining a position of a mobile device comprises at least one processing unit and at least one storage unit, wherein the at least one processing unit is configured to:

- obtain estimated positioning information of at least one node;
- determine at least one positioning information correction factor for each of the at least one node based on a comparison of the estimated positioning information of the at least one node with respective predetermined positioning information of the at least one node, wherein the respective predetermined positioning information is stored in the at least one storage unit;
- store the at least one positioning information correction factor in the at least one storage unit;
- obtain estimated positioning information of a mobile device; and
- determine adjusted positioning information of the mobile device by applying at least one of the at least one positioning information correction factor to the estimated positioning information of the mobile device based on a distance between the mobile device and the at least one node.

The at least one processing unit may comprise, for example, a common processor of a computing device. The at least one storage unit may comprise, for example, a common volatile or non-volatile storage unit. The at least one processing unit and the at least one storage unit may all be comprised in the same device or may be spread over multiple devices.

Advantages and embodiments of the apparatus disclosed herein may correspond, in general, to the embodiments and corresponding advantages discussed above and will not be repeated herein.

According to at least one embodiment:

- the at least one processing unit and the at least one storage unit are arranged in a dedicated device; and/or
- the at least one processing unit and the at least one storage unit are arranged in one of the at least one node; and/or
- the at least one processing unit and the at least one storage unit are arranged in multiple of the at least one node.

An advantage herein is that a configuration of the apparatus may be adapted to different scenarios and systems, in which the apparatus is applied. The dedicated device may be, for example, a separately implemented positioning engine.

A system comprises at least one node and a positioning engine, wherein the positioning engine is configured to implement the method according to any of the above-mentioned embodiments.

A computer program product comprises instructions, which, when executed on a computing device, is configured to implement the method according to any of the above-mentioned embodiments.

A computer-readable storage device comprises the above-mentioned computer program product.

Embodiments and advantages of the system, the computer program, and the computer-readable storage medium correspond, in general, to the embodiments and corresponding advantages of the method and apparatus discussed above and will not be repeated herein.

Advantages and embodiments, which are described with respect to any of the above aspects and embodiments, may be applied to any of the other aspects and embodiments accordingly.

BRIEF DESCRIPTION OF DRAWINGS

The above-mentioned methods, apparatus, and system of the disclosure and their embodiments will be explained in more detail in the following with the aid of the drawings. Elements and functional blocks having the same or similar function may bear the same reference numerals throughout the drawings. Hence, their description is not necessarily repeated in following drawings but may be mentioned and explained when they occur first.

In the figures:

Figure 1        shows a method for determining a position of a mobile device according to an exemplary embodiment of the disclosure;

Figures 2 and 3        show positioning information correction factors being determined according to an exemplary embodiment of the disclosure;

Figures 4 and 5        show a position of a mobile device being determined according to an exemplary embodiment of the disclosure;

Figures 6 and 7        show positioning information correction factors being determined according to another exemplary embodiment of the disclosure;

Figures 8 and 9        show a position of a mobile device being determined according to another exemplary embodiment of the disclosure;

Figure 10        shows a schematic view of an apparatus for determining a position of a mobile device according to an exemplary embodiment of the disclosure; and

Figure 11        shows a method for determining a position of a mobile device according to another exemplary embodiment of the disclosure.

DESCRIPTION OF EMBODIMENTS

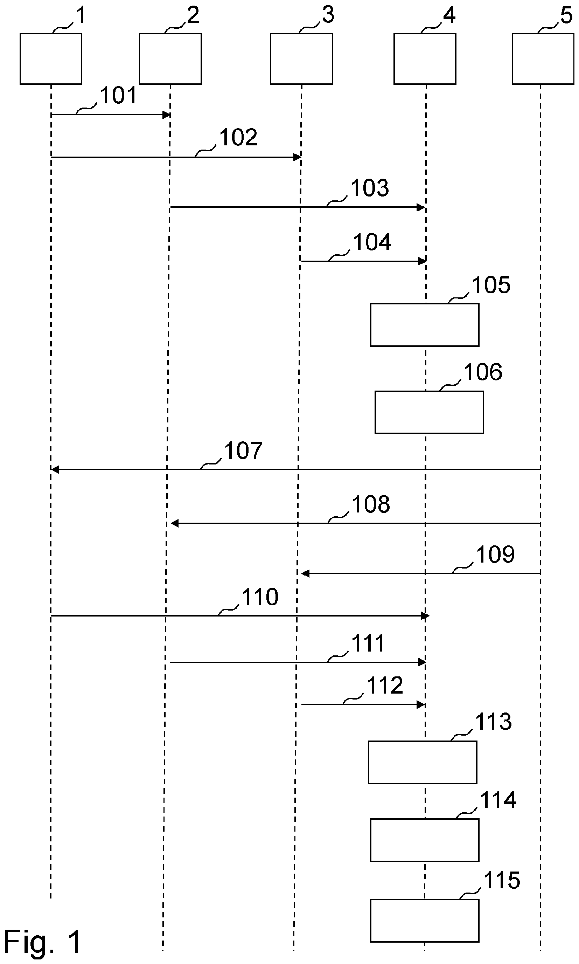

Figure 1 shows a flowchart of a method for determining a position of a mobile device according to an exemplary embodiment of the disclosure. The flowchart shows a simplified version for a 2-dimensional positioning of a mobile device in a 2-dimensional space. More complex versions thereof can of course be correspondingly implemented.

In Figure 1, method steps 101 to 115 are performed by a first node 1, a second node 2, a third node 3, a positioning engine 4, and a mobile device 5, whose position is to be determined. The method steps 101 to 115 being shown to be implemented by the respective entities, however, are not to be understood limiting for the methods disclosed in this application, but merely as an example. The implementation of the respective steps could also be configured differently. Moreover, that the positioning engine is disclosed as a separate entity in this and the following exemplary embodiments is not to be understood as a limitation for the disclosure. The positioning engine could also be implemented, for example, in one of the nodes, or one or multiple of the nodes implementing the steps of the positioning engine itself.

In the shown method, in a step 101 and a step 102, the first node 1 sends a positioning signal to the second and third node 2, 3. With other words, in those steps 101 and 102, the first node 1 acts as a tag or mobile device. The positioning signals sent by the first node 1 may be separate signals, or may be one signal, which is broadcast and received by the second and third node 2, 3.

The second and third node 2, 3 accordingly receive the positioning signal sent by the first node 1 and each perform positioning measurements on the received positioning signal(s). Those positioning measurements may, for example, comprise determining angles and/or distances between the first node 1 and the second/third node 2, 3 respectively.

In steps 103 and 104, results of the positioning measurements (i.e., the determined angles and/or distances) are sent to the positioning engine 4.

In step 105, the positioning engine 4 determines estimated positioning information of the first node 1 based on the measurements received from the second and third node 2, 3. This estimated positioning information may comprise, for example, either an estimated position of the first node 1, e.g. coordinates in a given space (such as [x,y] in a 2-dimensional space or [x,y,z] in a 3-dimensional space) which is determined based on the angles and/or distances provided by the second and third node 2, 3 to the positioning engine 4, or may comprise, for example, the obtained angles and/or distances itself directly.

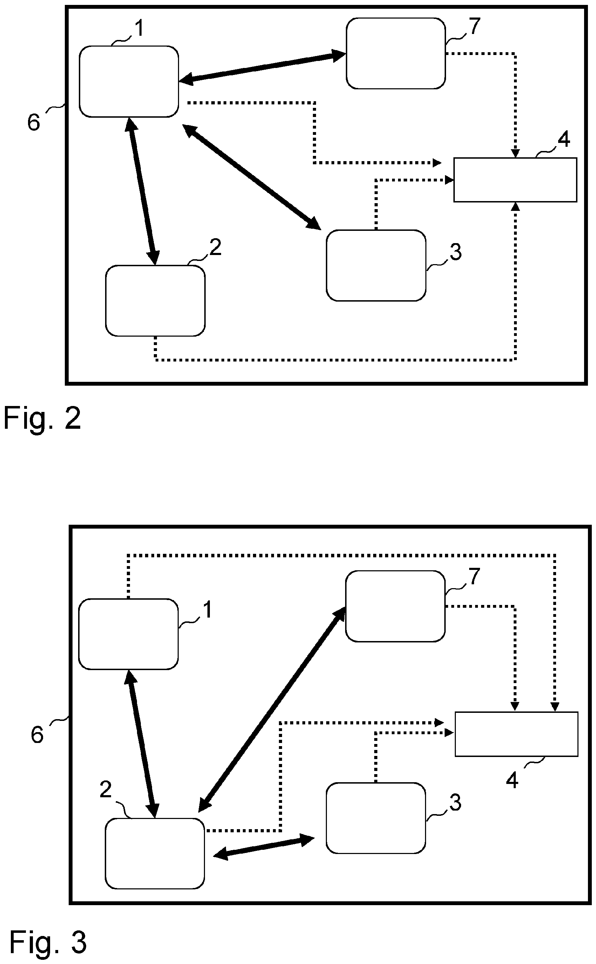

In a step 106, a positioning information correction factor for the first node 1 is determined by the positioning engine 4. The positioning information correction factor is determined based on an offset between the estimated positioning information determined in step 105 and known positioning information of the first node 1. This known positioning information of the first node 1 is, for example, stored in the positioning engine 4 and, hence, is predetermined, relating to a ground truth of the first node 1. For example, the known positioning information of the first node 1 may be provided to the positioning engine 4 in a configuration of the system shown herein. Alternatively to being stored in the positioning engine 4, the known positioning information may also be stored outside of the positioning engine 4 and may be requested from a cloud/edge service on demand. Determination of the positioning information correction factor will be further described in more detail with regard to the following figures, in particular Figures 2, 3, 5, and 6.

The positioning information correction factor may be determined depending on the type of the positioning information determined in step 105. For example, in case the estimated positioning information of the first node 1 is the position of the first node 1 in a given space, then the predetermined known positioning information of the first node 1 is the actual known position of the first node 1. In that case, the positioning information correction factor is a distance between the estimated position of the first node 1 and the known position of the first node. Alternatively, in case the estimated positioning information of the first node 1 comprises the angles and/or distances between the first node 1 and the other nodes 2, 3, then the predetermined positioning information of the first node 1 comprises the angles and/or distances between the actual position of the first node 1 and the other nodes 2, 3. In that case, the positioning information correction factor is an offset, by which the respective angles and/or distances of the estimated positioning information differs from the angles and/or distances of the predetermined known positioning information of the first node 1 with respect to the other nodes 2, 3.

The same determination of estimated positioning information and the positioning information correction factor as described above with regard to the first node according to steps 101 to 106 may be correspondingly performed for the second and third node 2, 3, in order to determine positioning information correction factors for those nodes 2, 3 as well. The above description will not be repeated herein but applies accordingly.

In steps 107, 108, and 109, the first, second and third node 1, 2, 3 receive a positioning signal from the mobile device 5. This positioning signal received by the first, second, and third node 1, 2, 3 may be in particular a positioning signal that is broadcast by the mobile device 5. Alternatively, it may, however, also be dedicated signals being received by the respective nodes 1, 2, 3.

Each node 1, 2, 3 performs positioning measurements on the respectively received signal and determines, for example, angles and/or a distance between the respective node 1, 2, 3 and the mobile device 5. Each node 1, 2, 3 sends in steps 110, 111, and 112 results of their positioning measurements, i.e., the determined angles and/or distance to the positioning engine 4.

The positioning engine 4 obtains the positioning measurements results and determines, in step 113, estimated positioning information of the mobile device 5 based on said positioning measurement results obtained from the first, second, and third node 1, 2, 3.

A type of the estimated positioning information of the mobile device 5 corresponds to the type of positioning information of the nodes 1, 2, 3, and therefore also corresponds to the type of positioning information correction factors determined in step 106. For example, in case the positioning information of the first node 1 is the position of the first node 1 and the positioning information correction factor of the first node 1 is the distance between the estimated position and the actual position of the first node 1, then the estimated positioning information of the mobile device determined in step 113 also relates to an estimated position of the mobile device 5. For example, in case the positioning information of the first node 1 are directly the angles and/or distances mentioned above and the positioning information correction factor of the first node is the offset of the angles and/or distances between the estimated position of the first node 1 and the actual position of the first node 1, then the estimated positioning information of the mobile device 5 determined in step 113 also relates to estimated angles and/or distances between the mobile device 5 and the respective nodes 1, 2, 3.

In a step 114, the positioning engine 4 determines, which node of the nodes 1, 2, 3 is the closest to the mobile device 5. Alternatively or additionally, the positioning engine 4 determines distances between the mobile device 5 and multiple or all of the nodes 1, 2, 3. Both determinations may be done based on an estimated position of the mobile device 5, wherein the estimated position directly relates to the estimated positioning information of the mobile device 5 in case the estimated positioning information relates to the estimated position of the mobile device 5, or may be determined based on the estimated positioning information of the mobile device 5 in case the estimated positioning information relates to the angles and/or distances between the mobile device 5 and the respective nodes 1, 2, 3, measured by each respective node.

In a step 115, the positioning engine 4 applies the positioning information correction factor of the node that has been determined in step 114 to be the node closest to the estimated positioning information of the mobile device 5. For example, in case node 1 is determined to be the node closest to the mobile device 5, then the positioning information correction factor of the first node 1 is applied to the estimated positioning information of the mobile device 5. In case the estimated positioning information of the mobile device 5 is the estimated position of the mobile device 5, then the positioning information correction factor relates to the distance (i.e., offset) between the estimated position of the first node and the actual position of the first node. This distance is applied to the estimated position of the mobile device 5, i.e., the estimated position of the mobile device 5 is corrected by said offset. In case the estimated positioning information of the mobile device 5 is the estimated angles and/or distances between the mobile device 5 and the respective nodes 1, 2, 3, then the positioning information correction factor relates to the offset of the estimated angles and/or distances between first node 1 and the respective other nodes 2, 3 and the actual angles and/or distances between the first node 1 and the respective other nodes 2, 3. Those offsets determined with regard to the first node 1 are applied to the estimated angles and/or distances of the estimated positioning information of the mobile device 5, i.e., the estimated angles and/or distances of the mobile device 5 are corrected by said offsets.

Alternatively or additionally, in case in step 114 the distances between the mobile device 5 and multiple or all nodes 1, 2, 3 are determined, it is also possible to determine a weighted positioning information correction factor, wherein the weight of each positioning information correction factor of the respective node 1, 2, 3 is weighted based on its distance from the estimated position of the mobile device 5. In particular, a positioning information correction factor of a node that is closer to the estimated position of the mobile device 5 receives a higher weight than a positioning information correction factor of a node that is further away from the mobile device 5. In this embodiment, there may also be a threshold introduced, based on which distance a weight for a positioning information correction factor of a node is considered to be zero, if said distance is above the threshold.

Obviously, the method described above may be applied to more complex systems. In particular, the method may correspondingly be applied to a system, in which at least four nodes are present, and with which 3-dimensional determination of the estimated positioning information of each of the nodes is possible. Such systems are, for example, described in the following figures.

For example, for a 2-dimensional positioning, at least three nodes may be used, as it is shown in Figure 1, in order to have at least two nodes, with which one node may exchange positioning signals. For example, for determining a location in a 2-dimensional positioning system, three distance values or one distance value and two angles of arrival, AoAs, may be used. For determining a location and one degree of freedom orientation, three distances and three AoAs or one distance and five AoAs may be used. For determining a location and two or three degrees of freedom orientation, three distances and six AoAs may be used.

For example, for a 3-dimensional positioning, at least four nodes may be used. For example, for determining a location in a 3-dimensional positioning system, six distances, or three distances and three AoAs or one distance and five AoAs may be used. For determining a location and two or three degrees of freedom orientation, six distances and eight AoAs may be used. Optionally, the aforementioned requirements may be reduced by constraining the solution with additional information or by setup restrictions.

Positioning signals mentioned in steps 101-115 may be short range signals, in particular Ultra-wideband (UWB), Wireless Local Area Network (WLAN), Bluetooth Low Energy (BLE) signals. Furthermore, positioning signals of cellular technologies like 5G or 6G variants, for example DECT2020 NR, may be used. Moreover, positioning signals of more generic mmWave RF solutions for radar usage or light (visible light/invisible) based solution, such as, for example, infrared, may be used for location determination in the context of this application.

Figures 2 and 3 show positioning information correction factors being determined according to an exemplary embodiment of the disclosure. In particular, Figures 2 and 3 show a system 6 comprising a first node 1, a second node 2, a third node 3, a fourth node 7, and a positioning engine 4. First node 1, second node 2, third node 3, and positioning engine 4 may correspond, in general, to those described above with regard to Figure 1. Fourth node 7 may correspond to the aforementioned first, second, and third node 1, 2, 3.

Figure 2 shows a state in which the first node 1 acts as a tag or as a mobile device, by transmitting a positioning signal to the second, third, and fourth node 2, 3, 7. The second, third, and fourth node 2, 3, 7 each perform positioning measurement on the received signal and provide their measurements to the positioning engine 4.

The positioning engine 4 obtains the respective measurement results from the second, third, and fourth node 2, 3, 7, and determines the estimated position of the first node 1 based on the measurements of the second, third, and fourth node 2, 3, 7. In this embodiment, the positioning information relates to a position of the respective device (nodes or mobile device), and is provided, for example, as 3-dimensional coordinates in the system 6.

Additionally, the first node 1 may perform pseudo-measurement of its own positioning information and provide this pseudo-measured own positioning information to the positioning engine 4, which is indicated by the dashed line between the first node 1 and the positioning engine 4. This provision of pseudo-measured positioning information from the first node 1 to the positioning engine 4 is an optional way of constraining the solution towards node 1 when calculating the positioning information corrections.

According to the state shown in Figure 2, the estimated position of the first node 1 may be determined as:

$$\text{N1\_pos(est)} = f(\text{dist\_N12, dist\_N13, dist\_N14})$$

and/or

$$\text{N1\_pos(est)} = g(\text{angle\_N12, angle\_N13, angle\_N14}),$$

wherein N1_pos(est) defines the estimated position of the first node 1, dist_N1X is the distance between the first node 1 and an xth node, angle_N1X is the angle between the first node 1 and an xth node, and f and g are functions to determine the position of the first node 1 based on the given distances/angles. Those functions may be used as known from triangulation and/or trilateration methods.

Figure 3 shows a state in which the second node 2 acts as a tag or as a mobile device, by transmitting a positioning signal to the first, third, and fourth node 1, 3, 7. The first, third, and fourth node 1, 3, 7 each perform positioning measurement on the received signal and provide their measurements to the positioning engine 4.

The positioning engine 4 obtains the respective measurement results from the first, third, and fourth node 1, 3, 7, and determines the estimated position of the second node 2 based on the measurements of the first, third, and fourth node 1, 3, 7.

$$\text{N2\_pos(est)} = f(\text{dist\_N21, dist\_N24, dist\_N23})$$

and/or

$$\text{N2\_pos(est)} = g(\text{angle\_N21, angle\_N24, angle\_N23}),$$

wherein N2_pos(est) defines the estimated position of the second node 2, dist_N2X is the distance between the second node 2 and an xth node, angle_N2X is the angle between the second node 2 and an xth node, and f and g are functions to determine the position of the second node 2 based on the given distances/angles.

In further states, which are not shown herein, the third and fourth node 3, 7 may accordingly act as nodes or mobile device by accordingly transmitting positioning signals, which are then received by the remaining nodes and accordingly processed as discussed above.

Based on the above determination of the estimated positions of the nodes 1, 2, 3, 7 in Figures 2 and 3, the positioning engine may then determine positioning information correction factors for each of the nodes 1, 2, 3, 7, in accordance to the determination of the positioning information correction factors described with respect to Figure 1 above. In the embodiment of Figures 2 and 3, since the estimated positioning information of the respective nodes 1, 2, 3, 7 relates to the estimated position of the nodes 1, 2, 3, 7, the respective positioning information correction factors relate to the offset between the estimated position and the actual position of the respective node 1, 2, 3, 7.

According to the embodiment of Figures 2 and 3, the positioning information correction factor for the first and second node 1, 2 may be determined as follows:

$$delta\_N1 = N1\_pos(est) - N1\_pos(true),$$

and

$$delta\_N2 = N2\_pos(est) - N2\_pos(true),$$

wherein delta_NX is the positioning information correction factor of an xth node, NX_pos(est) is the estimated position of the xth node, and NX_pos(true) is the known predetermined position of the xth node.

The corresponding formulas for determining the estimated positions of the third and fourth node, as well as for determining the positioning information correction factors for the third and fourth nodes can be set up correspondingly.

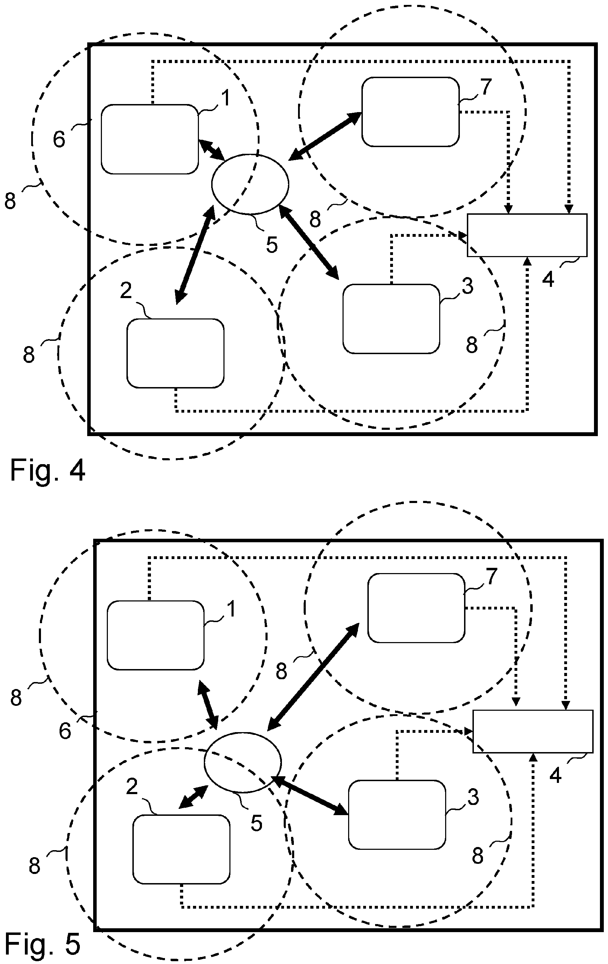

Figures 4 and 5 show a position of a mobile device 5 being determined according to an exemplary embodiment of the disclosure. In particular, Figures 4 and 5 show the determination of a position of the mobile device 5 using the system 6 described with respect to Figures 2 and 3. With other words, for determining the position of the mobile device 5 according to Figures 4 and 5, the positioning information correction factors as determined using Figures 2 and 3 may be used. Furthermore, Figures 4 and 5 show alternative states, which differ in a position of the mobile device 5, as will be discussed in the following.

In Figures 4 and 5, areas 8 are disclosed as dashed circles around each node 1, 2, 3, 7, which, however, are merely to be understood as illustrative for a better understanding.

In each of Figures 4 and 5, the mobile device 5 sends a positioning signal, which is received by each of the nodes 1, 2, 3, 7, respectively. Each node 1, 2, 3, 7 receives the positioning signal from the mobile device 5 and performs positioning measurement on the respectively received signal, in order to obtain estimated angles and distances. Those estimated angles and distances are sent by each respective node 1, 2, 3, 7 to the positioning engine 4.

The positioning engine 4, according to the embodiment shown in Figures 4 and 5, determines an estimated position of the mobile device 5 in both Figures. The positioning engine 4 then determines a node of the nodes 1, 2, 3, 7, which is closest to the mobile device 5. In the state shown in Figure 4, the first node 1 is determined to be the node closest to the mobile device 5, since the estimated position of the mobile device 5 overlaps with the area 8 of the first node 1. In the state shown in Figure 5, the second node 2 is determined to be the node closest to the mobile device 5, since the estimated position of the mobile device 5 overlaps with the area 8 of the second node 2.

The positioning engine 4 then applies the corresponding positioning information correction factor to the estimated position of the mobile device 5. In the state shown in Figure 4, the positioning engine 4 applies the positioning information correction factor of the first node 1 to the estimated position of the mobile device 5 in order to obtain the adjusted position of the mobile device 5. In the state shown in Figure 5, the positioning engine 4 applies the positioning information correction factor of the second node 2 to the estimated position of the mobile device 5 in order to obtain the adjusted position of the mobile device 5.

In both Figures 4 and 5, the estimated position of the mobile device 5 may be determined as:

$$tag\_pos(est) = f(angle\_N1, angle\_N2, angle\_N3, angle\_N4),$$

wherein tag_pos(est) is the estimated position of the mobile device 5, angle_NX is the angle between the mobile device and the xth node, and f is a function to determine the position of the mobile device 5 based on the given angles. This function may be used as known from triangulation. Alternatively or additionally, however, also respectively determined distances and accordingly a trilateration method may be used for determining the estimated position of the mobile device 5.

In the state shown in Figure 4, the adjusted position of the mobile device 5 may be determined as:

$$tag\_pos\_new(est) = tag\_pos(est) + delta\_N1,$$

and in the state shown in Figure 5, the adjusted position of the mobile device 5 may be determined as:

$$tag\_pos\_new(est) = tag\_pos(est) + delta\_N2,$$

wherein tag_pos_new(est) is the adjusted position of the mobile device 5, tag_pos(est) is the estimated position of the mobile device 5, and delta_NX is the positioning information correction factor of the xth node.

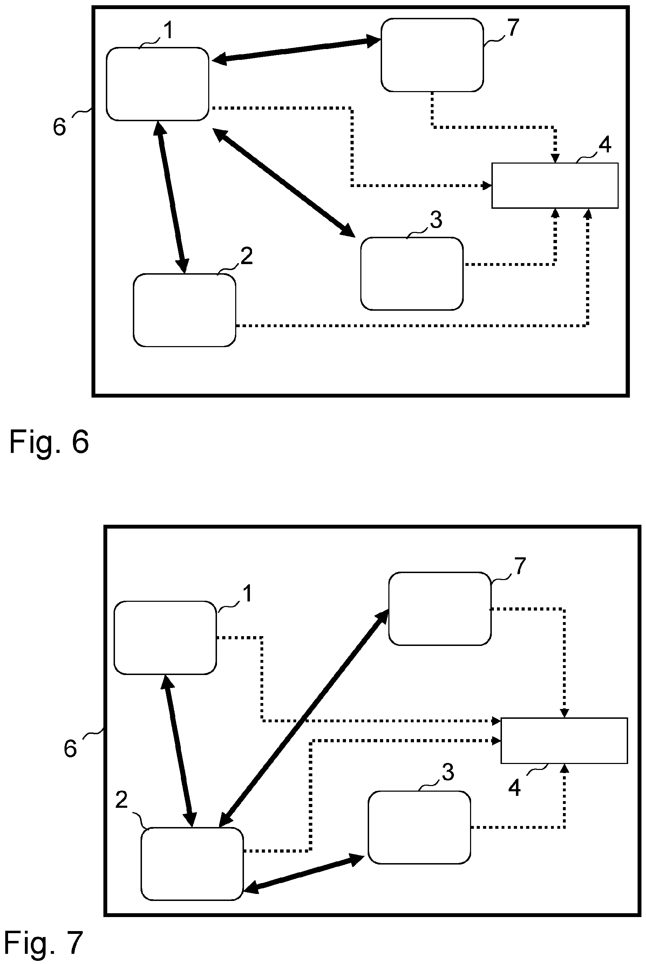

Figures 6 and 7 show positioning information correction factors being determined according to another exemplary embodiment of the disclosure. In the following, features that are identical to the embodiments discussed above with regard to Figures 2 to 5 are not repeated herein but apply accordingly to the embodiment described with regard to Figures 6 to 9. Focus is laid on the differences to those above-described Figures.

Figure 6 shows a state, in which estimated positioning information and a positioning information correction factor of the first node 1 is determined. As discussed above, the first node 1 acts as a tag and sends a positioning signal, which is received by the second, third, and fourth node 2, 3, 7. The second, third, and fourth node 2, 3, 7 each receive the signal and determine angles and distances between the first node 1 and each respective receiving node 2, 3, 7. The second, third, and fourth node 2, 3, 7 send the determined angles and distances to the positioning engine 4.

In this embodiment, however, the positioning engine does not need to determine a position of the first node 1 based on said measurements but uses the angles and/or distances directly as estimated positioning information of the first node 1. Correspondingly, in the state of Figure 7, angles and/or distances are provided to the positioning engine 4, which are directly used by the positioning engine 4 as estimated positioning information of the second node 2.

The positioning engine 4 determines the positioning information correction factor for node 1 according to the state of Figure 6 and the positioning information correction factor for node 2 according to the state of Figure 7. The positioning information correction factors in this case are differences between the angles and/or distances between the estimated angles and/or distances and known angles and/or distances obtained from known positions of the respective node duplets. Those known angles and/or distances may be, for example, derived from known positions of the nodes 1, 2, 3, 7 using basic trigonometry functions. Optionally, modelling functions, which may be used to capture the possible distance bias compensation function/model that is typically used in Wi-Fi and UWB ranging solutions to compensate distance related biases in the range observations. Those modelling functions may be used according to known determination of such angles and/or distances from respective positions, and may already generally consider signal effects on the positioning signals according to mechanisms known in the art.

For the determination of the positioning information correction factors, the following formulas may be used: According to the state shown in Figure 6, positioning information correction factors for the first node 1 may be determined as:

$$N12\_residual = obs(N1,N2) - model(N1,N2),$$

$$\dots ,$$

$$N1N\_residual = obs(N1,NN) - model(N1,NN),$$

wherein N1X_residual is the correction factor for positioning information relating to measurements between the first node 1 and the xth node, obs(N1,NX) is the estimated positioning information between the first node 1 and the xth node, and model(N1,NX) is a model calculation function for determining the corresponding positioning information (i.e., angles and distances) based on the position of the first node and the xth node.

According to the state shown in Figure 7, positioning information correction factors for the second node 2 may be determined as:

$$N21\_residual = obs(N2,N1) - model(N2,N1),$$

$$\dots ,$$

$$N2N\_residual = obs(N2,NN) - model(N2,NN),$$

wherein the values and formulas correspond to the above-mentioned values and formulas, with respect to the second node 2 instead of the first node 1.

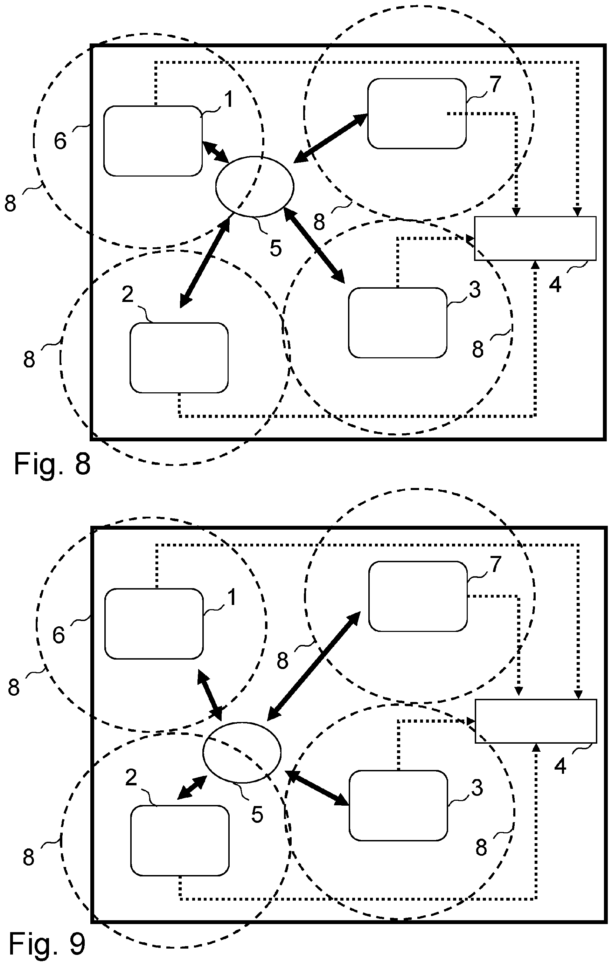

Figures 8 and 9 show a position of a mobile device 5 being determined according to another exemplary embodiment of the disclosure. In particular, Figures 8 and 9 show the determination of a position of the mobile device 5 using the system 6 described with respect to Figures 6 and 7. With other words, for determining the position of the mobile device 5 according to Figures 8 and 9, the positioning information correction factors as determined using Figures 6 and 7 may be used. Furthermore, Figures 8 and 9 show alternative states, which differ in a position of the mobile device 5, corresponding to the alternative states shown in Figures 4 and 5.

In Figures 8 and 9, areas 8 are disclosed as dashed circles around each node 1, 2, 3, 7, as discussed above with regard to Figures 4 and 5.

In each of Figures 8 and 9, the mobile device 5 sends a positioning signal, which is received by each of the nodes 1, 2, 3, 7, respectively. Each node 1, 2, 3, 7 receives the positioning signal from the mobile device 5 and performs positioning measurement on the respectively received signal, in order to obtain estimated angles and distances. Those estimated angles and distances are sent by each respective node 1, 2, 3, 7 to the positioning engine 4.

The positioning engine determines an estimated position of the mobile device 5 and determines, based on said estimated position of the mobile device 5, a node of the nodes 1, 2, 3, 7, which is closest to the mobile device 5. In the state shown in Figure 8, the first node 1 is determined to be the node closest to the mobile device 5, since the estimated position of the mobile device 5 overlaps with the area 8 of the first node 1. In the state shown in Figure 9, the second node 2 is determined to be the node closest to the mobile device 5, since the estimated position of the mobile device 5 overlaps with the area 8 of the second node 2.

The positioning engine 4 then, however, does not correct the estimated position using the offsets as discussed with respect to Figures 4 and 5, but applies the corresponding positioning information correction factor to the estimated angels and distances between the mobile device 5 and the respective nodes 1, 2, 3, 7. In the state shown in Figure 8, the positioning engine 4 applies the positioning information correction factor of the first node 1 to calculate the adjusted position of the mobile device 5. In the state shown in Figure 9, the positioning engine 4 applies the positioning information correction factor of the second node 2 to calculate the adjusted position of the mobile device 5.

In the state shown in Figure 8, the adjusted position of the mobile device 5 may be calculated as:

```
tag_pos_new(est)=
    f(dist/angle obs N1,… NN, N1_delta_residuals(N2…NN)),
```

and in the state shown in Figure 9, the adjusted position of the mobile device 5 may be calculated as:

```
tag_pos_new(est)=
    f(dist/angle obs N2,… NN, N2_delta_residuals(N1,N3…NN)),
```

wherein tag_pos_new(est) is the adjusted calculated position of the mobile device 5, and f(dist/angle obs N1, ... NN, N1_delta_residuals(N2...NN) is a function f using the estimated distances and angles dist/angle obs N1, ... NN of the mobile device 5 and the respective nodes 1 to N, under consideration of the correction values for the distances and angles of the first node: N1_delta_residuals(N2...NN), or of the second node correspondingly.

With other words, the adjusted position of the mobile device 5 is calculated by using its range/angle observations to the respective nodes N1 to NN and associated positioning correction factors as reported by the closest node, in the case of Figure 8 the first node 1 (N1) and in the case of Figure 9 the second node 2 (N2). The corrected range/angle observation is calculated by subtracting the positioning correction factors (N1_delta_residuals(N2...NN) or N2_delta_residuals(N1, N3...NN)) from the observed range/angle measurements. The corrected range/angle measurements are then used in e.g. a WLS solver to calculate the corrected mobile device 5 location (and orientation).

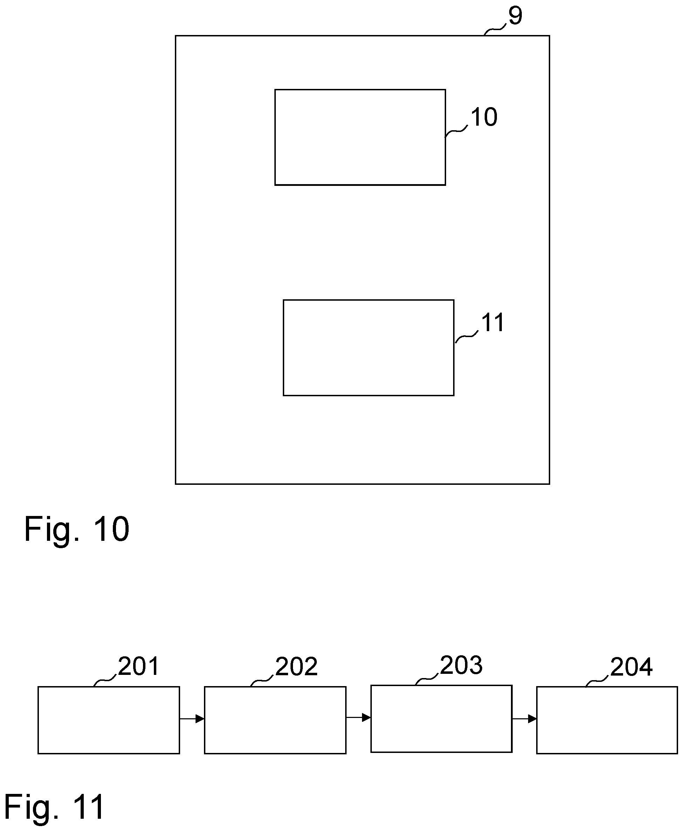

Figure 10 shows a schematic view of an apparatus 9 for determining a position of a mobile device according to an exemplary embodiment of the disclosure.

The apparatus 9 comprises a processing unit 10 and a storage unit 11. The processing unit 10 is configured to obtain estimated positioning information of at least one node. The processing unit 10 is further configured to determine at least one positioning information correction factor for each of the at least one node based on a comparison of the estimated positioning information of the at least one node with respective predetermined positioning information of the at least one node, wherein the respective predetermined positioning information is stored in the at least one storage unit. The processing unit 10 is further configured to store the at least one positioning information correction factor in the at least one storage unit, to obtain estimated positioning information of a mobile device, and to determine adjusted positioning information of the mobile device by applying at least one of the at least one positioning information correction factor to the estimated positioning information of the mobile device based on a distance between the mobile device and the at least one node.

The apparatus 9 described herein may be, for example, the positioning engine described with regard to any of the Figures 1 to 9. This may be a dedicated apparatus as shown in Figure 10, or may be implemented as a distributed positioning engine.

Figure 11 shows a method for determining a position of a mobile device according to another exemplary embodiment of the disclosure.

In a step 201, estimated positioning information of at least one node is obtained. In a step 202, at least one positioning information correction factor for each of the at least one node based on a comparison of the estimated positioning information of the at least one node with respective predetermined positioning information of the at least one node is determined. In a step 203, estimated positioning information of a mobile device is obtained, and in a step 204, adjusted positioning information of the mobile device is determined by applying at least one of the at least one positioning information correction factor to the estimated positioning information of the mobile device based on a distance between the mobile device and the at least one node.

The method steps 201 to 204 may be implemented, for example, by a positioning engine, or by one or more than one of the nodes mentioned above.

**EP 4 667 960 A1**

LIST OF REFERENCE SIGNS

1    first node
2    second node
3    third node
4    positioning engine
5    mobile device
6    system
7    fourth node
8    area
9    apparatus
10   processing unit
11   storage unit

101 to 115    method steps
201 to 204    method steps

**Claims**

1. A method for determining a position of a mobile device (5), the method comprising the steps:

   - obtaining (201) estimated positioning information of at least one node (1, 2, 3, 7);
   - determining (202) at least one positioning information correction factor for each of the at least one node (1, 2, 3, 7) based on a comparison of the estimated positioning information of the at least one node (1, 2, 3, 7) with respective predetermined positioning information of the at least one node (1, 2, 3, 7);
   - obtaining (203) estimated positioning information of a mobile device (5);
   - determining (204) adjusted positioning information of the mobile device (5) by applying at least one of the at least one positioning information correction factor to the estimated positioning information of the mobile device (5) based on a distance between the mobile device (5) and the at least one node (1, 2, 3, 7).

2. The method according to claim 1, wherein the step of obtaining (201) estimated positioning information of at least one node (1, 2, 3, 7) comprises:

   - obtaining an angle of arrival and/or an angle of departure of at least one signal transmitted between the at least one node (1, 2, 3, 7) and at least one further node (1, 2, 3, 7), and
   - determining the estimated positioning information of the at least one node (1, 2, 3, 7) based on the obtained angle of arrival and/or angle of departure of the at least one signal; and/or
   - obtaining a distance between the at least one node (1, 2, 3, 7) and at least one further node (1, 2, 3, 7) based on at least one signal transmitted between the at least one node (1, 2, 3, 7) and the at least one further node (1, 2, 3, 7), and
   - determining the estimated positioning information of the at least one node (1, 2, 3, 7) based on the obtained distance between the at least one node (1, 2, 3, 7) and at least one further node (1, 2, 3, 7).

3. The method according to claim 1 or 2, wherein:

   - the estimated positioning information of the at least one node (1, 2, 3, 7) and the predetermined positioning information of the at least one node (1, 2, 3, 7) each comprise a position of the at least one node (1, 2, 3, 7); and
   - the estimated positioning information of the mobile device (5) comprises a position of the mobile device (5).

4. The method according to claim 3, wherein:

   - the at least one positioning information correction factor for each of the at least one node (1, 2, 3, 7) comprises a value of a difference between the estimated position and the predetermined position of the respective node (1, 2, 3, 7).

5. The method according to claim 1 or 2, wherein:

- the estimated positioning information of the at least one node (1, 2, 3, 7) and the predetermined positioning information of the at least one node (1, 2, 3, 7) each comprise an angle of arrival and/or an angle of departure and/or a distance between the at least one node (1, 2, 3, 7) and at least one further node (1, 2, 3, 7); and
- the estimated positioning information of the mobile device (5) comprises an angle of arrival and/or an angle of departure and/or a distance between the at least one node (1, 2, 3, 7) and the mobile device (5).

6. The method according to claim 5, wherein:

- the at least one positioning information correction factor for each of the at least one node (1, 2, 3, 7) comprises a value of a difference between the estimated and the predetermined angle of arrival and/or angle of departure and/or distance between the at least one node (1, 2, 3, 7) and the at least one further node (1, 2, 3, 7).

7. The method according to any of claim 1 to 6, wherein the step of determining (204) the adjusted positioning information of the mobile device (5) by applying at least one of the at least one positioning information correction factor to the estimated positioning information of the mobile device (5) based on the distance between the mobile device (5) and the at least one node (1, 2, 3, 7) comprises:

- determining a node (1, 2, 3, 7) that is closest to the mobile device (5); and
- applying the at least one positioning information correction factor of the closest node (1, 2) to the estimated positioning information of the mobile device (5).

8. The method according to any of claim 1 to 6, wherein the step of determining (204) the adjusted positioning information of the mobile device (5) by applying at least one of the at least one positioning information correction factor to the estimated positioning information of the mobile device (5) based on the distance between the mobile device (5) and the at least one node (1, 2, 3, 7) comprises:

- determining at least two nodes (1, 2, 3, 7) that are closest to the mobile device (5);
- determining at least one weighted positioning information correction factor based on the at least one positioning information correction factor of each of the at least two closest nodes (1, 2, 3, 7), wherein a weight of the at least one positioning information correction factor of each of the at least two closest nodes (1, 2, 3, 7) is determined based on a respective distance to the mobile device (5); and
- applying the at least one weighted positioning information correction factor of the at least two closest nodes (1, 2, 3, 7) to the estimated positioning information of the mobile device (5).

9. The method according to any of claims 1 to 8, wherein the step of obtaining (203) estimated positioning information of a mobile device (5) comprises:

- obtaining at least one angle of arrival and/or at least one angle of departure and/or at least one distance between the mobile device (5) and the at least one node (1, 2, 3, 7) based on at least one signal received by the at least one node (1, 2, 3, 7) from the mobile device (5); and
- determining the estimated positioning information of the mobile device (5) based on the at least one angle of arrival and/or at least one angle of departure and/or at least one distance between the mobile device (5) and the at least one node (1, 2, 3, 7).

10. An apparatus (9) for determining a position of a mobile device (5), the apparatus (9) comprising at least one processing unit (10) and at least one storage unit (11), wherein the at least one processing unit (10) is configured to:

- obtain estimated positioning information of at least one node (1, 2, 3, 7);
- determine at least one positioning information correction factor for each of the at least one node (1, 2, 3, 7) based on a comparison of the estimated positioning information of the at least one node (1, 2, 3, 7) with respective predetermined positioning information of the at least one node (1, 2, 3, 7), wherein the respective predetermined positioning information is stored in the at least one storage unit (11);
- store the at least one positioning information correction factor in the at least one storage unit (11);
- obtain estimated positioning information of a mobile device (5); and
- determine adjusted positioning information of the mobile device (5) by applying at least one of the at least one positioning information correction factor to the estimated positioning information of the mobile device (5) based on a distance between the mobile device (5) and the at least one node (1, 2, 3, 7).

11. The apparatus (9) according to claim 10, wherein the at least one processing unit (10) is further configured to implement at least some of the method steps of any of claims 2 to 9.

12. The apparatus (9) according to claim 10 or 11, wherein:

    - the at least one processing unit (10) and the at least one storage unit (11) are arranged in a dedicated device; and/or
    - the at least one processing unit (10) and the at least one storage unit (11) are arranged in one of the at least one node (1, 2, 3, 7); and/or
    - the at least one processing unit (10) and the at least one storage unit (11) are arranged in multiple of the at least one node (1, 2, 3, 7).

13. A system (6) comprising at least one node (1, 2, 3, 7) and a positioning engine (4), wherein the positioning engine (4) is configured to implement the method according to any of claims 1 to 9.

14. A computer program product comprising instructions, which, when executed on a computing device, is configured to implement the method according to any of claims 1 to 9.

15. A computer-readable storage device comprising the computer program product according to claim 13.

Fig. 1

Fig. 2

Fig. 3

Fig. 4

Fig. 5

Fig. 6

Fig. 7

Fig. 8

Fig. 9

9

10

11

Fig. 10

201     202     203     204

Fig. 11

Europäisches
Patentamt

European
Patent Office

Office européen
des brevets

# EUROPEAN SEARCH REPORT

**Application Number**

EP 24 18 3137

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 286 881 A1 (ECOLE ROYALE MILITAIRE KONINKLIJKE MILITAIRE SCHOOL [BE]) 6 December 2023 (2023-12-06) * claim 1; figures 1, 4-8 * * paragraphs [0017] - [0065] * ----- | 1-15 | INV. G01S1/02 G01S5/02 ADD. G01S5/04 |
| A | US 2013/045750 A1 (KIM SEONG CHEOL [KR] ET AL) 21 February 2013 (2013-02-21) * claim 1 * * paragraph [0062] * ----- | 1-15 | G01S5/06 G01S5/12 G01S5/16 |
| A | US 2018/288569 A1 (WANG MICHAEL [US]) 4 October 2018 (2018-10-04) * paragraphs [0067], [0101] * ----- | 2,11 | |
| A | US 2017/356979 A1 (GEORGIOU ORESTIS [GB] ET AL) 14 December 2017 (2017-12-14) * paragraphs [0127] - [0130] * * paragraphs [0149], [0150] * ----- | 7-9,11 | |

TECHNICAL FIELDS
SEARCHED     (IPC)

G01S

The present search report has been drawn up for all claims

| Place of search | Date of completion of the search | Examiner |
|---|---|---|
| Munich | 27 November 2024 | Krummenacker, Benoît |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 18 3137

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2024

| Patent document cited in search report | | Publication date | Patent family member(s) | | Publication date |
|---|---|---|---|---|---|
| EP 4286881 | A1 | 06-12-2023 | EP | 4286881 A1 | 06-12-2023 |
| | | | WO | 2023232981 A1 | 07-12-2023 |
| US 2013045750 | A1 | 21-02-2013 | KR | 20130020295 A | 27-02-2013 |
| | | | US | 2013045750 A1 | 21-02-2013 |
| US 2018288569 | A1 | 04-10-2018 | CN | 110915253 A | 24-03-2020 |
| | | | EP | 3596960 A1 | 22-01-2020 |
| | | | US | 2018288569 A1 | 04-10-2018 |
| | | | US | 2023413011 A1 | 21-12-2023 |
| | | | WO | 2018170493 A1 | 20-09-2018 |
| US 2017356979 | A1 | 14-12-2017 | GB | 2551347 A | 20-12-2017 |
| | | | JP | 6375400 B2 | 15-08-2018 |
| | | | JP | 2017223645 A | 21-12-2017 |
| | | | US | 2017356979 A1 | 14-12-2017 |

EPO FORM P0459

For more details about this annex : see Official Journal of the European Patent Office, No. 12/82